Europäisches Patentamt

(19) European Patent Office

Office européen des brevets

(11) EP 0 740 288 A2

(12) **EUROPEAN PATENT APPLICATION**

(43) Date of publication:
30.10.1996 Bulletin 1996/44

(51) Int. Cl.⁶: $G11B\ 5/187$, $G11B\ 15/62$, $G11B\ 5/41$

(21) Application number: 96106404.5

(22) Date of filing: 24.04.1996

(84) Designated Contracting States:
DE FR GB

(30) Priority: 27.04.1995 US 429976

(71) Applicant: EASTMAN KODAK COMPANY
Rochester, New York 14650 (US)

(72) Inventors:
• Brock, George William,
c/o Eastman Kodak Company
Rochester, New York 14650-2201 (US)

• Connolly, Jeremiah Finbarr,
c/o Eastman Kodak Co.
Rochester, New York 14650-2201 (US)

(74) Representative: Schmidt, Peter, Dipl.-Ing. et al
KODAK Aktiengesellschaft
Patentabteilung
70323 Stuttgart (DE)

(54) **Magnetic head assembly having beveled air skiving transverse slots**

(57) A magnetic head assembly (30) comprising a magnetic head (32) having an arcuate surface (34) which interfaces with flexible magnetic media (18) moved over said surface in a first direction; and a first slot (36) formed in said arcuate surface of said magnetic head to skive entrained air and debris from said magnetic media, said first slot extending transverse to said direction of movement of said magnetic media and having first and second corners (AA',BB') formed with said arcuate surface, wherein said second corner is beveled at an angle ($\beta$) with respect to the horizontal of from 15° to less than 90° to reduce the formation of debris.

FIG. 2

EP 0 740 288 A2

Printed by Rank Xerox (UK) Business Services
2.13.8/3.4

## Description

Field of Invention

This invention relates in general to a magnetic head assembly for use in magnetic media record and reproduction systems. More particularly, this invention relates to a magnetic head assembly having a magnetic record/reproduce element flanked by transverse slots with beveled corners for skiving entrained air debris from magnetic tape contacting the magnetic element while reducing debris formation and deterioration of the magnetic media surface.

Background of the Invention

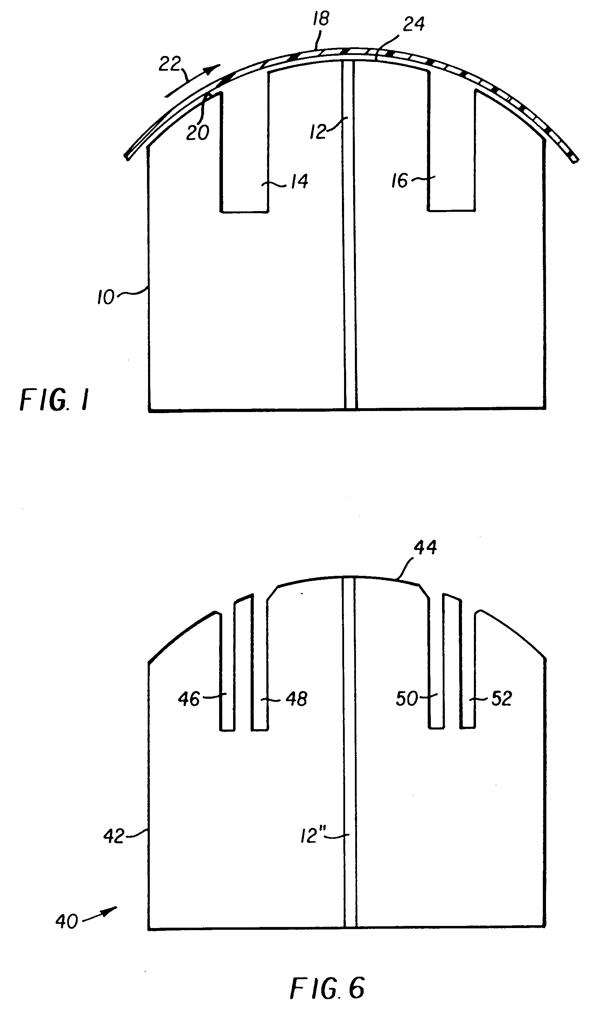

The present trend in magnetic recording and reproducing from magnetic media, such as magnetic tape, dictates higher data transfer rates and higher data packing density on the magnetic media. Higher packing density is synonymous with shorter recorded wavelength and, as is known in the art, signal spacing loss during both record and reproduce operations becomes increasingly severe with decreasing recorded wavelength. Intimate contact between the tape and the head is therefore required to preclude signal deterioration due to the spacing loss. The tendency of the magnetic tape to fly over the head caused by entrained air acting as a bearing, and the presence of debris at the interface between the tape and head which lifts the tape away from the head gap are primary causes of tape to head spacing, magnetic head deterioration, and record and playback signal degradation It has been proposed to use sharp corners to skive the air film produced in high speed tape drives as the tape engages the magnetic head. Transverse slots with such sharp edges are shown in Fig. 1. As shown, magnetic head assembly 10 includes a magnetic record/reproduce gap 12 flanked by transverse slots 14 and 16. Magnetic tape 18 contacts the arcuate surface 20 of magnetic head assembly 10. As magnetic tape 18 moves over surface 20 of assembly 10 in the direction of arrow 22, slot 14 skives air produced by the rapid motion of tape 18 relative to head assembly 10 and promotes contact of the tape with the land 24 between slots 14 and 16. The magnetic transducing element 12 is located at the apex of the arcuate land midway between slots 14 and 16. As shown in Fig. 1, slots 14 and 16 have sharp edges which increase the abrasion of the tape and the subsequent deterioration in output signal. (See, for example, U.S. Patent 5,034,838, issued July 23, 1991, inventors Brock et al.)

U.S. Patent 4,956,737, issued September 11, 1990, inventor Brock, discloses a magnetic head contour utilizing facets for air film skiving. The facet in the contour provides a gradual slope breaking the continuity of the head contour. The break in the contour provides an edge to skive the air adjacent to the tape and the facet provides a gently ramping surface which engages any asperity on the tape surface in a less aggressive manner than occurs when the asperity encounters a shoulder directly. Because of the stiffness of the tape, the tape does not contact the head contour over the length of the facet. Instead, the tape spans the contour between the edges of the facet. The air skived from the tape by the facet edge is squeegeed out between the tape and the facet and a slot in the facet increases the cross-sectional area through which the air is expelled. Although the concept disclosed in the latter patent is appropriate for the use for which it was intended at low tape velocity, it has not been suitable for in-contact service at the velocities in current drives, it also has a strong tendency to contaminate at the beveled edge. The following U.S. patents disclose various magnetic head assemblies which do not provide solutions to the problems set forth above. U.S. Patent 4,949,208, issued August 14, 1990, inventors Milo et al.; U.S. Patent 4,825,532, issued May 2, 1989, inventor Ricards; U.S. Patent 3,947,887, issued March 30, 1976, inventor Platter; U.S. Patent 4,809,110, issued February 28, 1989, inventor Hertrich; U.S. Patent 3,806,902, issued April 23, 1974, inventors Vrees et al.; and U.S. Patent 4,695,909, issued September 22, 1987, inventors Momata et al.

There is thus a problem in the prior art of magnetic head assemblies of providing a magnetic head assembly which assures close contact between magnetic media moving over the head assembly while minimizing entrapment of debris and air between the magnetic head assembly and the magnetic media, and consequent degradation of the magnetic media.

Summary of the Invention

According to the present invention, there is provided a solution to the problems of magnetic head assemblies of the prior art, as set forth above. According to the present invention, there is provided a magnetic head assembly which provides close contact between the magnetic head assembly and magnetic media moving over the magnetic head assembly while minimizing build-up of debris and air between the magnetic head assembly and magnetic media, and resultant minimization of degradation of the magnetic media caused thereby.

According to an aspect of the present invention, there is provided a magnetic head assembly comprising a magnetic head having an arcuate surface which interfaces with flexible magnetic media moved over said surface in a first direction; and a first slot formed in said arcuate surface of said magnetic head to skive entrained air and debris from said magnetic media, said first slot extending transverse to said direction of movement of said magnetic media and having first and second corners formed with said arcuate surface, wherein said second corner is beveled at an angle with respect to the horizontal of from 15° to less than 90° to reduce the formation of debris.

Brief Description of the Drawings

Fig. 1 is a sectional elevational view of a magnetic head assembly of the prior art;
Fig. 2 is a elevational diagrammatic view of an embodiment of the present invention;
Figs. 3a-3d, 4a-4d, and 5a-5b are graphical views useful in explaining the present invention; and
Fig. 6 is a diagrammatic elevational view of another embodiment of the present invention.

Description of the Preferred Embodiments

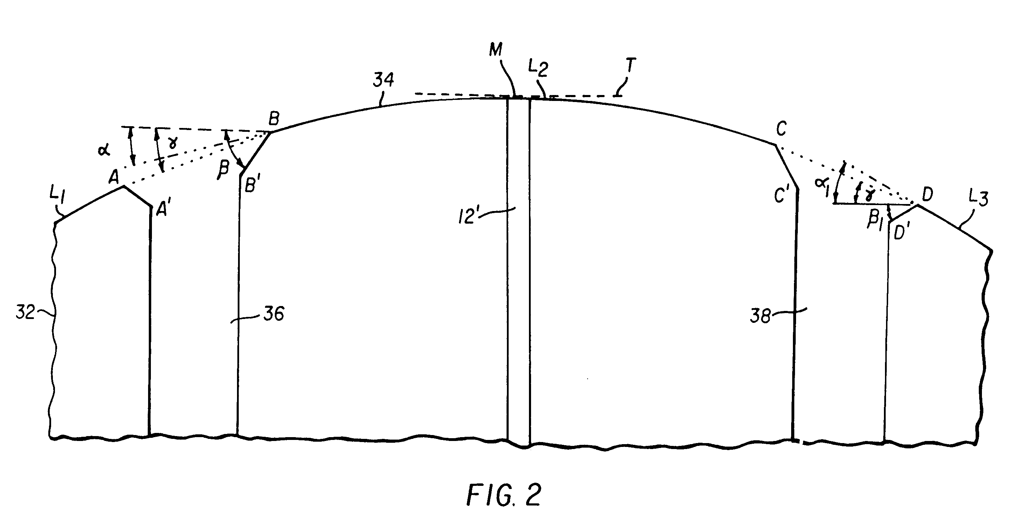

Referring now to Fig. 2, there is shown an embodiment of the present invention. As shown, magnetic head assembly 30 includes a magnetic head 32 having an arcuate (preferably cylindrical) upper surface 34 which interfaces with a magnetic media, such as magnetic tape 18 (Fig. 1). Respective first and second slots 36 and 38 extend transverse to the direction of movement of magnetic tape 18 and divide arcuate surface 34 into lands $L_1$, $L_2$, and $L_3$. First slot 36 includes a first corner A-A' and a second corner B-B'. Second slot 38 includes a first corner C-C' and a second corner D-D'. Land $L_2$ includes a magnetic transducing element 12' at the center thereof.

Fig. 2 shows the invention where the slot walls are beveled at the bearing surface. For corner B of the center land $L_2$, define the tangent angle $\alpha$ as the angle between the tangent to the cylinder at B and the horizontal. As used in this application, the term "horizontal" is defined as the tangent T to the apex M of the magnetic head at the midpoint between slots 36 and 38. Define $\gamma$ as the angle between the chord joining the corners A and B of the left slot and the horizontal. Then an attack angle is defined as $\gamma - \alpha$, and the bevel angle $\beta$ as the angle between the bevel and the horizontal. The minimum value of the bevel angle $\beta$ is $\gamma$, which corresponds to the bevel running along the chord. The maximum bevel angle is 90°, which corresponds to no bevel. Define the slot width as the horizontal distance from A to B. The land length, for the center land $L_2$ is the horizontal distance from B to C. Define the bevel lengths as the horizontal lengths from A-A', B-B', C-C', and D-D'.

Similarly, for the corner D, define $\alpha_1$ as the angle between the tangent to the cylinder at D and the horizontal. Establish a notation, that the angle is positive when you rotate counterclockwise from the horizontal line passing through D. Then $\alpha_1 < 0$. Define $\gamma_1$ as the angle between the chord joining the corners C and D, and the horizontal. Then $\gamma_1 = -\gamma < 0$. The definition of the attack angle is the same as in the last paragraph. Define the bevel angle $\beta_1$ as the angle between the bevel and the horizontal. Then the minimum bevel angle is $\beta_1 = \gamma_1 < 0$, which corresponds to the bevel running along the chord. The maximum bevel angle is $\beta_1 = 90°$, which corresponds to no bevel.

For bi-directional motion, corners B and C should have the same bevel angle ($\beta$), corners A and D should have the same bevel angle ($\beta_1$), the slot width A-B should be equal to C-D, and bevel lengths A-A' = D-D' and B-B' = C-C'.

For a head of radius R, land 2L and slot width S (A-B), then the tangent angles are:

$$\alpha = \mathrm{Sin}^{-1} (L/R)$$

$$\alpha_1 = \mathrm{Sin}^{-1}((L+S)/R),$$

the chord angle $\gamma$ is:

$$\gamma = \tan^{-1} \left\{ \frac{(R^2-L^2)^{1/2} - (R^2-(L+S)^2)^{1/2}}{S} \right\}$$

Using a method of analysis based on a solution of the mathematical equations (see Heinrich and Wadhwa, "Analysis of Self-Acting Foil Bearings", Tribology and Mechanics of Magnetic Storage systems, ASLE SP-21, Vol-III, pp. 152-159, 1986) which govern the motion of the tape over the recording head coupled to that for the air bearing formed in that process and the constraint of contact between the recording head and tape, the optimum bevel angles ($\beta$ and $\beta_1$) can be determined. The mathematical model uses the finite element numerical technique to solve the transient, coupled system of equations for the motion of the tape, the Reynolds lubrication equation for the air bearing and the contact pressure described below, which provides a reaction force to the tape as it is drawn closer to the head surface than the actual average height of the asperities on the tape surface.

The contact pressure ($P_c$) is introduced into the model when the head to tape spacing (h) becomes less than the RMS roughness of the tape ($h_{con}$). The following equation, based on data by Lacey (see C. Lacey and F.E. Talke, "Measurement and Simulation of Partial Contact at the Head/Tape Interface", Journal of Tribology, ASME, Vol. 114, October 1992) defines the contact pressure effect:

$$P_c = 0 \text{ for } h > h_{con}$$

$$= \Omega(1-h/h_{con})^2 P_a \text{ for } h < h_{con}$$

where $P_a$ is the ambient pressure. Parameters $\Omega$ and $h_{con}$ were determined experimentally by Lacey for a number of different tapes.

In the Reynold's lubrication equation, first order slip flow is included to correct for slip flow effects caused by a bearing thickness on the order of the air molecule dimensions. A slip flow coefficient of $6.4 \times 10^{-8}$ (m) and an air viscosity of $1.81 \times 10^{-5}$ (Pa.sec) was used.

The mathematical model allows consideration of variations in parameters, such as tape thickness, flexural stiffness, width, speed and velocity, head radius, wrap angle, land length, slot width, bevel angle and length. The proposed invention is illustrated for fixed values of some of those parameters. A single bump head is considered, however, it is understood that some recording heads possess more than a single bump and the same principles apply to the slots on all of these bumps. However, it is understood that all of these parameters can be changed as well. The significant parameters of slot width and bevel angles are discussed in detail.

The head radius considered in the analysis is 9.375 mm (0.375 inches), which is considered reasonable for high density magnetic recording. The land length B-C, is taken as 0.25 mm (10 mils). This is the portion of the head's air bearing surface between the two slots and contains the reproduce or record gap at the mid-point between the slots and is at the apex of the circular cylinder. The total wrap angle is 10°. This number defines the penetration of the recording head into the tape path, relative to the position of guides or rollers, usually found on either side of a recording head.

The tape thickness is 0.0125 mm (0.5 mils), having a width of 6.3 mm (0.25 ins), a flexural stiffness of 140 000 Kp/m$^2$ (2 million psi.) and a Poisson's ratio of 0.3. The tape tension is 56,7 g (2 ozs) and the speed is 1.56 m/s (62.5 ips). The contact pressure parameters are $\Omega = 100$, and $h_{con} = 50$nm. The ambient air pressure is 84100 Pa.

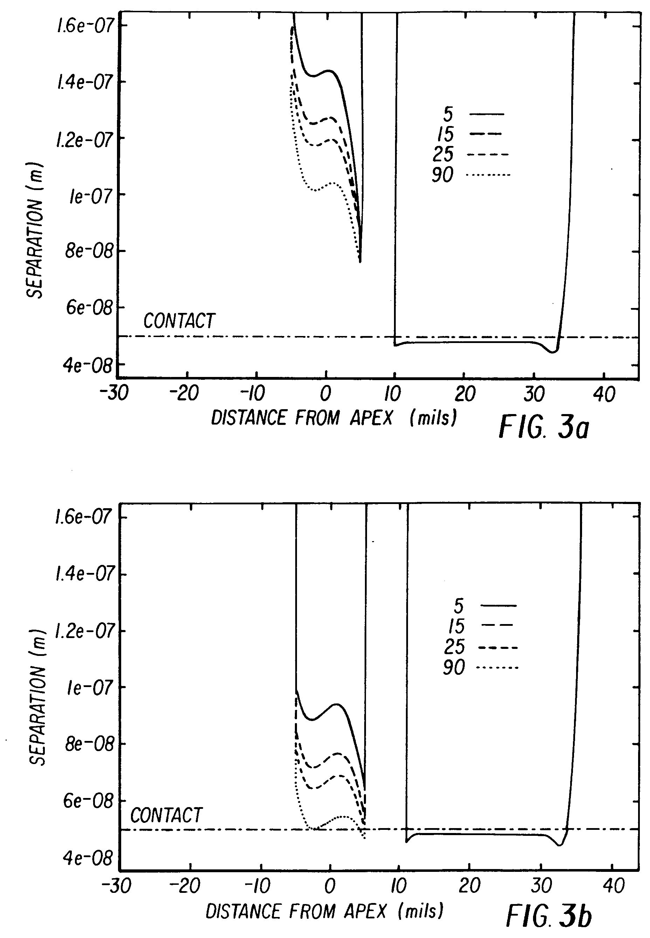

Figures 3a-3d show the effect of slot size (A-B = C-D = 0.125, 0.15, 0.2 and 0.25 mm = 5, 6, 8, and 10 mils) for variable bevel angle $\beta$ (at corners B and C of the center land $L_2$) and a fixed bevel angle $\beta_1 = 90°$ (at corner A on the leading land $L_1$, and D on the trailing land $L_3$) for tape traveling from left to right in that figure. All the bevel lengths are equal, with a value of 0.05 mm (2 mils). Note, that in these figures, because of the vertical scale of the spacing between the tape and the head, there is not shown the much larger spacing of the tape over the leading land $L_1$.

Fig. 3a shows, for the conditions chosen for this illustration, that a slot size of 0.125 mm (5 mils) is not adequate to produce intimate head to tape spacing over the center land $L_2$. This is true for any bevel angle $\beta$. The tape, however, does make contact over a sizable area of the trailing land $L_3$.

Fig. 3b shows that a 0.15 mm (6 mil) slot will produce minimal spacing over the center land $L_2$ for a slot without a bevel. However, note that the tape does not contact the center land $L_2$ at the corner without a bevel. However, note that the tape does not contact the center land $L_2$ at the corner B of the slot. This will cause instabilities in the contact over $L_2$, and in particular at the gap region. Introducing a bevel causes the tape to fly over $L_2$.

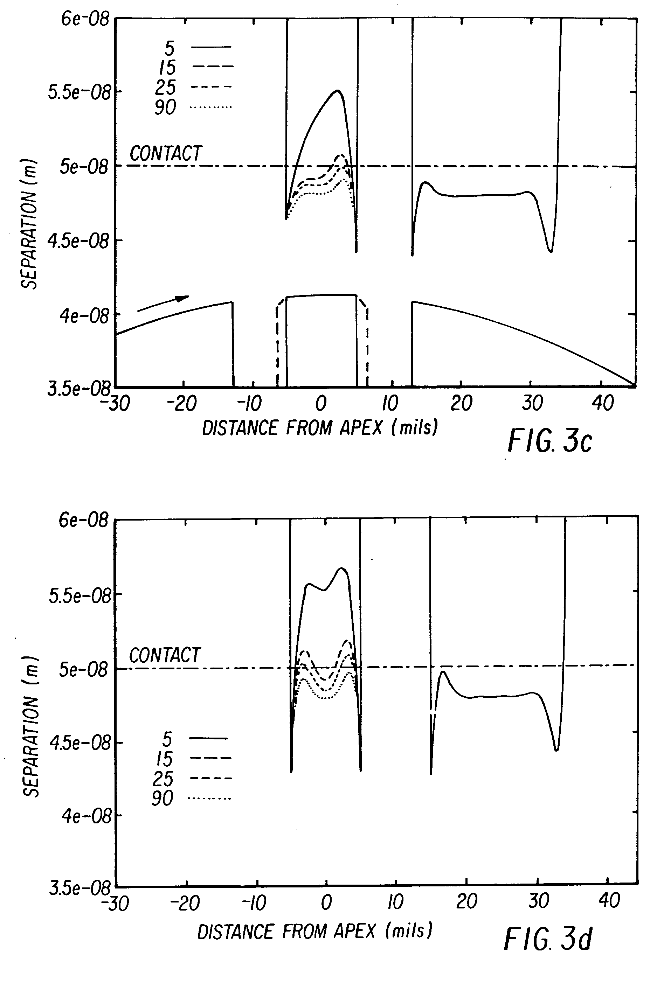

Fig. 3c shows that an 0.2 mm (8 mil) slot produces complete contact over $L_2$ for bevel angles $\beta$ greater than 25°, with the asperities on the tape being compressed at the corners (B and C) of the slot for all values of $\beta$ considered. Thus, an 0.2 mm (8 mil) slot with a bevel angle of 25° will produce stable compliance on $L_2$, and will reduce the contact pressure at the corners (B and C) of the slot when compared to the sharp $\beta = 90°$ condition.

Fig. 3d shows that a 0.25 mm (10 mil) slot will also produce complete contact over $L_2$ for bevel angles $\beta$ of at least 25°. Thus, as illustrated, for a given head radius, land length, bevel length, tape speed, tension and stiffness, a certain minimum slot size is required for adequate and stable compliance. As the slot size increases past 0.25 mm (10 mils), the contact pressure is increased at corners B, C and D and over $L_2$ and $L_3$ and hence the abrasivity, with no improvement in compliance.

Experiments carried out on heads of radius 9.375 mm (0.375"), and with 0.25 mm (10 mils) wide slots, and with bevel angles ranging from 0° to 90°, confirmed that the abrasive action of the heads decreased with bevel angle and that contact was established at the head gap for bevel angles $\beta$ above 15°. However, transients in the motion caused intermittent loss of contact compliance and thus a minimum operating bevel angle $\beta$ is best chosen at 25°. The other parameters in the experiment were as described earlier.

The chord angles for the four slot lengths considered at 1.15° (for A-B = 0.125 mm = 5 mils), 1.22° (for A-B = 0.15 mm = 6 mils), 1.37° (for A-B = 0.2 mm = 8 mils), 1.53° (for A-B = 0.25 mm = 10 mils). Thus, to engage corner B, the chord angle has to be greater than 1.22°. The attack angles are given in the following table for 4 head radius values 9.375 mm, 12.5 mm, 15.8 mm, and 19.0 mm (0.375", 0.500", 0.625", and 0.750") and for 5 slot widths from 0.125 mm to 0.3 mm (from 5 to 12 mils):

|    | 9.375 mm (0.375") | 12.5 mm (0.500") | 15.8 mm (0.625") | 19.0 mm (0.750") |
|----|-------------------|------------------|------------------|------------------|
| 5  | 0.38 | 0.29 | 0.23 | 0.19 |
| 6  | 0.46 | 0.34 | 0.28 | 0.23 |
| 8  | 0.61 | 0.46 | 0.37 | 0.31 |
| 10 | 0.76 | 0.57 | 0.46 | 0.38 |
| 12 | 0.92 | 0.69 | 0.55 | 0.46 |

From Figs. 3a-3d, the desired range of attack angle is between 0.46° and 0.76°. The upper limit is because of the increased abrasiveness of the skiving edge with attack angle. In performing similar analysis on heads with radii of 12.5 mm, 15.8 mm and 19.0 mm (0.5", 0.625" and 0.75"), we find that this range is valid also.

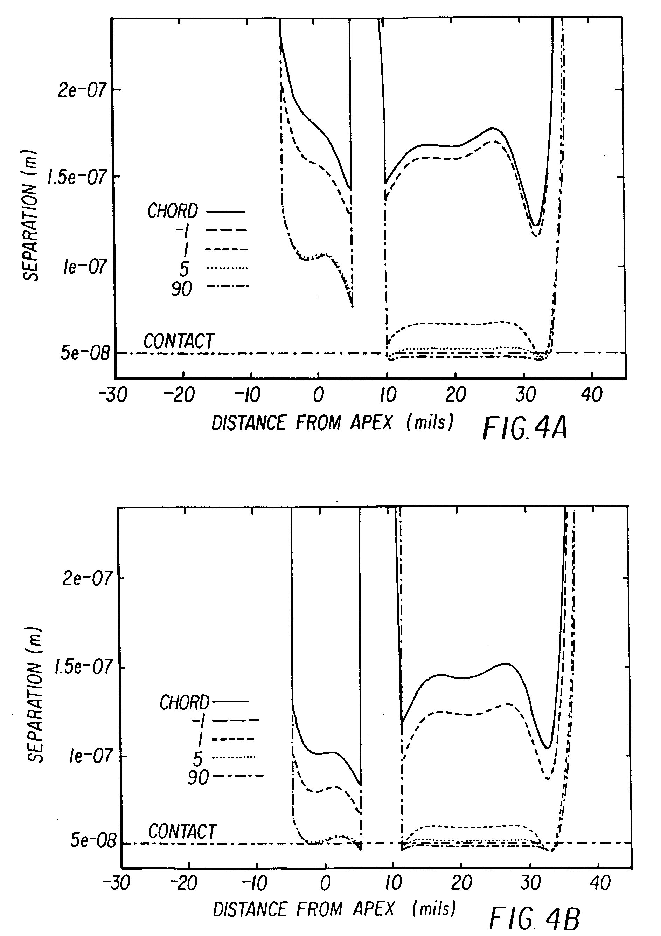

Figs. 4a-4d show the effect of slot size (A-B = C-D = 0.125 mm, 0.15 mm, 0.2 mm and 0.25 mm (5,6,8, and 10 mils)) for a fixed bevel angle $\beta = 90°$, and for variable bevel angles $\beta_1$ varying from $\gamma_1$ (the chord angle defined above) to 90°, for tape traveling from left to right in that figure. Note again that in these figures, because of the vertical scale of the spacing between the tape and the head, there is not shown the much larger spacing of the tape over the leading land $L_1$.

Fig. 4a shows that for a narrow 0.125 mm (5 mil) slot, a bevel angle of less than 1° will cause the tape to fly over the trailing land $L_3$ everywhere, while for 1° and more, the tape contacts at the exit corner D of the slot and the exit of the bearing. Increasing the bevel angle $\beta_1$ causes the tape to contact the trailing land $L_3$, as is shown by the 90° case. If the active element is at the apex of the cylinder on the center land $L_2$, then contact with the trailing land $L_3$ is not required and undesirable because of the increased abrasion. Fig. 4a does show that a row of 2 narrow 0.125 mm (5 mils) slots can produce the intimate compliance over a large area of $L_3$, thus a pair of slots can replace a single wider slot and produce contact with lower contact pressures on land $L_3$. This can be useful in a 3 bump (head) assembly, where the transducer is not necessarily at the apex.

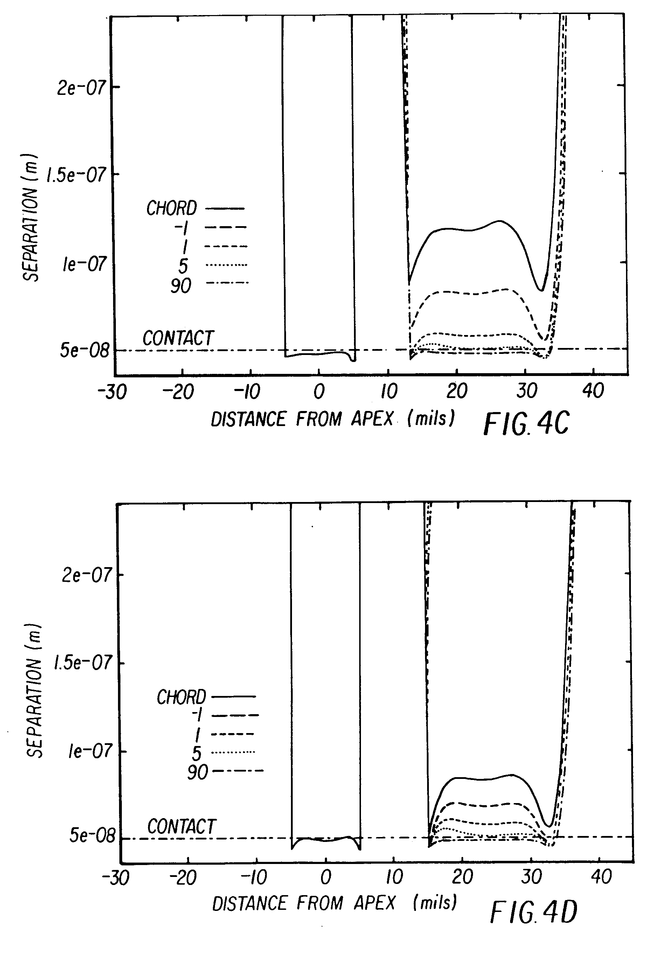

Fig. 4b shows the spacing for a 0.15 mm (6 mil) slot Fig. 4c shows the spacing for a 0.2 mm (8 mil) slot, and unlike the 0.125 and 0.15 mm (5 and 6 mil) cases, the spacing over the center land $L_2$ is not effected by the bevel angle $\beta_1$ because of the increased slot width. With perfect compliance on the center land $L_2$, the advantage of beveling the trailing land is seen when the bevel angle $\beta_1 < 5°$, the tape flies over most of the air bearing surface $L_3$ and contacts at the corner D of the slot and at the exit of the air bearing region. For $\beta_1 > 5°$, the tape on the trailing land $L_3$ is in contact. The same is true for a slot of 0.25 mm (10 mils), as shown in Fig. 4d.

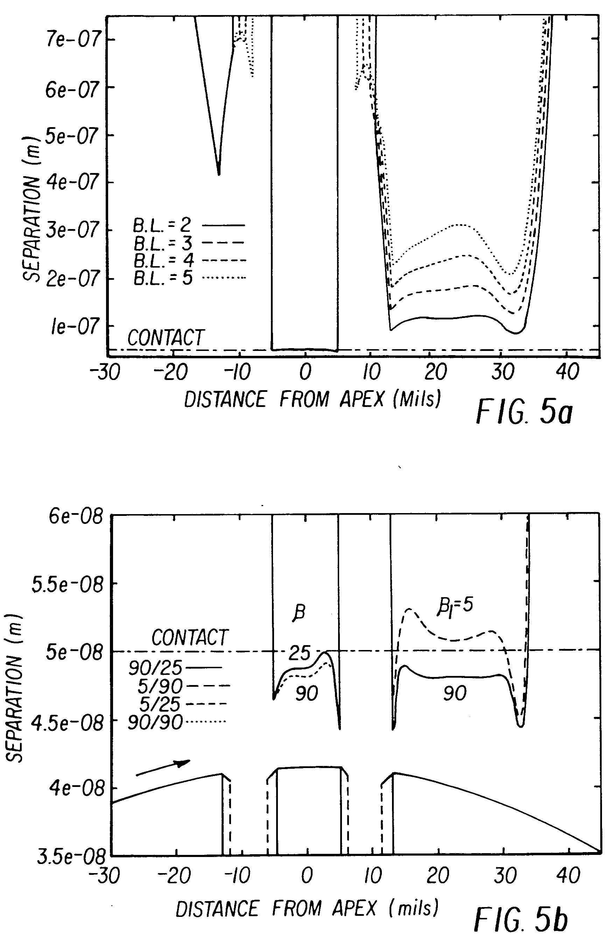

Increasing bevel length from the 0.05 mm (2 mils) used in the analysis so far, increases the spacing over the land $L_3$. For a slot of 0.2 mm (8 mils), bevel lengths of 0.075, 0.1 and 0.125 mm (3, 4 and 5 mils) produce contact on land $L_2$ and increasing spacing over land $L_3$, for a bevel lying along the chord. This is shown in Fig. 5a.

Fig. 5b shows the spacing between the recording head and the tape for an 0.2 mm (8 mil) slot for 4 different values of bevel angles combinations of both $\beta = 25°$ and 90°, and $\beta_1 = 5°$ and 90°. As deduced from Figs. 4c and 4d, the large slot size decouples the influence of the bevel angle $\beta$ on the spacing over land $L_2$ and of $\beta_1$ on the spacing over $L_2$. The prior art technology uses $\beta_1 = \beta = 90°$. A first case is for $\beta_1 = 90°$ and $\beta > 25°$, thus reducing the abrasivity of the corners and the surface of the center land $L_2$. A second case is for $\beta_1 < 5°$ and $\beta > 25°$, thus additionally reducing the abrasivity of the corners and eliminating the surface contact away from corner D on the trailing land $L_3$ thus reducing the abrasivity of the tape on the $L_3$. This was observed experimentally, confirming the prediction.

Fig. 6 shows another embodiment of the present invention. As shown, magnetic head assembly 40 includes a magnetic head 42 having an arcuate surface 44 for interfacing with moving magnetic media. Magnetic head 42 includes centrally disposed magnetic transducing element 12". A first set of transverse slots 46 and 48 are provided in magnetic head 42 on one side of element 12". A second set of transverse slots 50 and 52 are provided in magnetic head 42 on the other side of element 12". The corners of slots 46, 48 and 50, 52 are beveled according to the present invention as described above.

The invention has been described detail with particular reference to preferred embodiments thereof, but it will be understood that variations and modification can be effected within the scope of the invention as claimed.

## Claims

1.  A magnetic head assembly comprising:

a magnetic head (32) having an arcuate surface (34) which interfaces with flexible magnetic media (18) moved over said surface in a first direction (22); and

a first slot (36) formed in said arcuate surface (34) of said magnetic head to skive entrained air and debris from said magnetic media (18), said first slot extending transverse to said direction of movement of said magnetic media and having first and second corners (A, B) formed with said arcuate surface, wherein said second corner (B) is beveled at an angle with respect to the horizontal of from 15° to less than 90° to reduce the abrasivity of the said first slot wall.

2. The magnetic head assembly of claim 1 including a second slot (38) in said arcuate surface (34) of said magnetic head (32) to skive entrained air and debris from said magnetic media (18) when it is moved in a second direction opposite to said first direction (22) over said arcuate surface, said second slot (38) being spaced from and parallel to said first slot (36) and having first and second corners (C, D) formed with said arcuate surface, said first and second slots being separated by a land ($L_2$) having a magnetic element (12'), said second corner (B) of said first slot (36) and said first corner (C) of said second slot (38) forming the ends of said land ($L_2$), wherein said first corner (C) of said second slot (38) is beveled at an angle with respect to the horizontal of from 15° to less than 90° to reduce the abrasivity of the said second slot wall.

3. The magnetic head assembly of claim 2 wherein said second corner (B) of said first slot (36) and said first corner (C) of said second slot (38) are beveled at the same angle.

4. The magnetic head assembly of claim 1 wherein said first corner (A) of said first slot (36) is beveled at an angle with respect to the horizontal of from less than 5° to greater than the chord angle.

5. The magnetic head assembly of claim 2 wherein said first corner (A) of said first slot (36) and said second corner (D) of said second slot (38) are each beveled at an angle with respect to the horizontal of from less than 5° to greater than the chord angle.

6. The magnetic head assembly of claim 5 wherein said first corner (A) of said first slot (36) and said second corner (D) of said second slot (38) are beveled at the same angle.

7. A magnetic head assembly comprising:

a magnetic head (42) having an arcuate surface (44) which interfaces with flexible magnetic media (18) moved over said surface in a first direction, said arcuate surface including a magnetic transducing element (12"); first and second slots (46,48) formed in said arcuate surface (44) of said magnetic head (42) on one side of said magnetic transducing element, to skive entrained air and debris from said magnetic media, said first and second slots (46,48) extending transverse to said direction of movement of said magnetic media and each having first and second corners formed with said arcuate surface (44), wherein said first corner of said first slot is beveled at an angle with respect to the horizontal of less than 5° and greater than the chord angle to reduce the propensity of tape surface abrasion, and wherein said second corner of said second slot is beveled at an angle with respect to the horizontal of from 15° to less than 90° to reduce the formation of debris and to maintain intimate contact between said magnetic media (18) and said magnetic head (42).

8. The magnetic head assembly of claim 7 including third and fourth slots (50,52) formed in said arcuate surface (44) of said magnetic head (42) on the opposite side of said magnetic transducing element (12"), to skive entrained air and debris from said magnetic media (18), said third and fourth slots (50,52) extending transverse to said direction of movement of said magnetic media and each having first and second corners formed with said arcuate surface, wherein said second corner of said fourth slot is beveled at an angle with respect to the horizontal of less than 5° and greater than the chord angle to reduce the propensity of tape surface abrasion, and wherein said first corner of said third slot is beveled at an angle with respect to the horizontal of from 15° to less than 90° to reduce the formation of debris and to maintain intimate contact between said magnetic media (18) and said magnetic head (42).

9. A magnetic head assembly comprising:

a magnetic head (42) having an arcuate surface (44) which interfaces with flexible magnetic media (18) moved over said surface (44) in a first direction, said arcuate surface including a magnetic transducing element (12"); a plurality of slots (46,48) formed in said arcuate surface (44) of said magnetic head (42) on one side of said magnetic transducing element (12"), to skive entrained air and debris from said magnetic media, said plurality of slots extending transverse to said direction of movement of said magnetic media and each having first and second corners formed with said arcuate surface, wherein said first corner of said first slot (46) of said plurality of slots is beveled at an angle with respect to the horizontal of less than 5° and greater than the chord angle to reduce the propensity of tape surface abrasion, and wherein said second corner of said last slot (48) of said plurality of slots is beveled at an angle with respect to the horizontal of from 15° to less than 90° to reduce the formation of debris and to maintain intimate contact between said magnetic media (18) and said magnetic head (42).

10. The magnetic head assembly of claim 9 including a second plurality of slots (50,52) formed in said arcuate surface (44) of said magnetic head (42) on the opposite side of said magnetic transducing element (12"), to skive entrained air and debris from said magnetic media, said second plurality of slots extending transverse to said direction of movement of said magnetic media and each having first and second corners formed with said arcuate surface, wherein said second corner of said last slot (52) of said second plurality of slots is beveled at an angle with respect to the horizontal of less than 5° and greater than the chord angle to reduce the propensity of tape surface abrasion, and wherein said first corner of said first slot (50) of said second plurality of slots is beveled at an angle with respect to the horizontal of from 15° to less than 90° to reduce the formation of debris and to maintain intimate contact between said magnetic media (18) and said magnetic head (42).

FIG. 1

FIG. 6

FIG. 2

EP 0 740 288 A2

*FIG. 3a*

*FIG. 3b*

FIG. 3c

FIG. 3d

FIG. 4A

FIG. 4B

*FIG. 4C*

*FIG. 4D*

FIG. 5a

FIG. 5b